# FASCICULE DE BREVET EUROPEEN

(11) **EP 3 438 000 B1**
(45) Date de publication et mention de la délivrance du brevet: **11.03.2020**
(21) Numéro de dépôt: 18306052.4
(22) Date de dépôt: 01.08.2018
(51) Int. Cl.: B64D 33/02, B64D 29/00, F02C 7/045, G10K 11/16

(54) **SYSTÈME ACTIF GÉNÉRANT DES INTERFÉRENCES ACOUSTIQUES DESTRUCTIVES POUR MOTEUR D'AÉRONEF À PLUSIEURS CORPS DE SOUFFLANTE**
AKTIVES SYSTEM, DAS DESTRUKTIVE AKUSTISCHE INTERFERENZEN FÜR EINEN LUFTFAHRZEUGMOTOR MIT MEHREREN GEBLÄSEKÖRPERN ERZEUGT
ACTIVE SYSTEM GENERATING DESTRUCTIVE ACOUSTIC INTERFERENCE FOR AIRCRAFT ENGINE HAVING A PLURALITY OF FANS

(30) Priorité: 01.08.2017 FR 1757366
(43) Date de publication de la demande: 06.02.2019
(73) Titulaire: SAFRAN AIRCRAFT ENGINES, 75015 Paris (FR)
(72) Inventeur: ROUX, Jean Michel, 77550 Moissy-Cramayel (FR); JODET, Norman Bruno André, 77550 Moissy-Cramayel (FR); BAUDOIN, Laurent Louis Robert, 77550 Moissy-Cramayel (FR)
(74) Mandataire: Regimbeau

(56) Documents cités:
- EP-A2- 1 607 603
- EP-A2- 1 992 810
- GB-A- 2 544 625
- US-A- 4 044 203

## Description

### DOMAINE TECHNIQUE DE L'INVENTION ET ETAT DE LA TECHNIQUE

La présente invention s'inscrit dans le domaine des turbomachines pour ensemble propulsif d'aéronef.

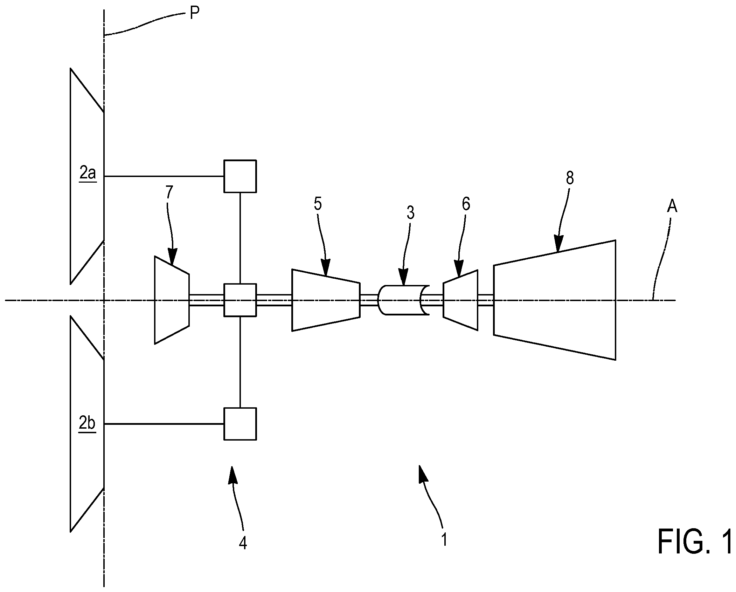

On s'intéressera plus particulièrement dans toute la suite à des turboréacteurs à double flux présentant une architecture à plusieurs corps de soufflante, de type « Multifan ». Cette architecture, qui exploite le principe de propulsion distribuée, est représentée sur la **figure 1** annexée. Le turboréacteur 1, conçu avec une architecture Multifan et présentant un axe de révolution A, est un turboréacteur double corps doté d'un corps HP (haute pression) comprenant un compresseur 5 HP et une turbine 6 HP, ainsi que d'un corps BP (basse pression) comprenant un compresseur 7 BP et une turbine 8 BP, et d'une chambre de combustion 3.
La turbine 8 entraîne non pas un seul rotor de soufflante, mais deux rotors de soufflante 2a et 2b distincts, d'axes parallèles à l'axe A, disposant de deux conduites aval dissociées et non coaxiales. Les rotors 2a et 2b sont articulés au corps BP par le système de transmission 4. Les surfaces avant des rotors 2a et 2b sont sensiblement contenues dans un même plan perpendiculaire à l'axe A, représenté par le plan P sur la figure 1. L'intérêt de ce type d'architecture est de permettre l'augmentation du taux de dilution (aussi noté BPR) du turboréacteur et donc son rendement thermodynamique, en contournant les contraintes techniques et opérationnelles liées à une augmentation du diamètre d'un unique corps de soufflante telles que la vitesse en tête d'aubes de soufflante, ou la garde au sol.

Pour de tels moteurs, se pose cependant la problématique de la réduction du bruit généré par les éléments aérodynamiques d'un turboréacteur lors de son fonctionnement, qui peut être appelé « bruit moteur ». Notamment, l'ensemble constitué par les soufflantes et les aubes directrices de sortie (aussi dites OGV) contribue de manière importante au bruit moteur. Le bruit moteur se propage à l'amont comme à l'aval de ces éléments. Des solutions sont recherchées pour atténuer les fluctuations de pression générées par ces éléments, sans impacts importants sur l'encombrement mécanique, la masse ou la consommation énergétique du système.

Une solution bien connue consiste à installer sur l'intérieur de la nacelle d'un turboréacteur des panneaux anti-bruit « en nid d'abeille », où une tôle perforée sépare l'intérieur de la structure des flux d'air. Cependant, l'efficacité d'un tel traitement n'est optimale que pour une gamme de fréquences relativement réduite, dépendant de la conception des panneaux utilisés.

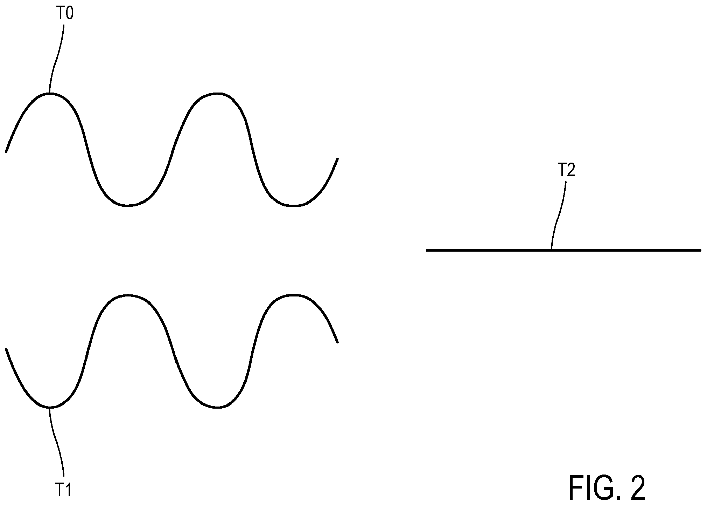

La surface de traitement étant de plus en plus limitée par la dimension de la nacelle, il a également été proposé d'exploiter des phénomènes d'interférences destructives entre les ondes acoustiques en aval des corps de soufflante.
Ce phénomène d'interférence, illustré de manière schématique sur la **figure 2** annexée, se produit lorsque deux signaux provenant de sources distinctes se superposent en un point. Dans le cas où les deux signaux sont de forme et d'amplitude identique, l'un des signaux étant en opposition de phase avec le second comme le sont les signaux T0 et T1 représentés sur la figure 2, il est possible d'obtenir en résultante T2 une annulation du bruit. La compression générée par l'une des ondes est alors compensée par la détente associée à la seconde. Dans le cas où les deux ondes ne sont pas exactement en opposition de phase, il est tout de même possible d'obtenir une onde sonore résultante d'amplitude bien moindre, et donc d'atténuer le bruit généré par le système.

La demande de brevet FR2998267 au nom de la Demanderesse propose, pour réduire le bruit de la soufflante d'un moteur, un dispositif inspiré du concept déjà connu de tube HQ, pour tube de Herschel-Quincke (tube creux courbé constituant une dérivation parallèle pour les flux d'air, dans un conduit dans lequel circule une onde acoustique). Le tube HQ peut être disposé dans une conduite d'air d'un turboréacteur équipée d'un panneau en nid d'abeille sur sa surface, et traverser l'épaisseur du panneau en nid d'abeille pour déboucher à ses deux extrémités sur l'intérieur de la conduite. Un signal acoustique de fluctuation de pression est ainsi prélevé dans le conduit et réinjecté en un autre point avec un déphasage étudié pour l'atténuation du bruit généré par ce signal acoustique. Le signal réinjecté réalise des interférences destructives avec le signal non déphasé auquel il est superposé.
En particulier, du fait que le signal acoustique n'est pas réinjecté à l'endroit du prélèvement, il ne permet pas de garantir une similitude suffisante pour obtenir une atténuation significative par interférences destructives. D'autre part, le déphasage obtenu dépend de la taille du tube HQ, ce qui impose d'être en mesure d'adapter la longueur du tube en fonction du régime des corps de soufflante. De ce fait, ce système de contrôle passif n'est d'efficacité optimale que pour un unique point de fonctionnement du moteur.

La demande de brevet FR2968048 au nom de la Demanderesse propose, quant à elle, un dispositif de contrôle actif du bruit moteur. Le contrôle est dit « actif » car l'élimination du bruit provient, dans ce dispositif, du contrôle d'une source additionnelle de bruit positionnée au voisinage des pièces générant le bruit avion. Dans ce document, la source active de bruit est formée par des actuateurs piézoélectriques de dimension réduite localisés sur les OGV, directement au niveau des surfaces aérodynamiques. Ces sources électrostatiques génèrent un signal sonore préférentiellement dipolaire pour être le plus similaire possible avec le bruit généré par les soufflantes, cette technologie se basant également sur le principe des interférences destructives.
Toutefois, le niveau de puissance du bruit de soufflante est inatteignable dans les contraintes d'intégration d'un turboréacteur standard. De ce fait, il est difficile d'obtenir une atténuation sonore significative. De plus, la masse importante du dispositif empêche de l'installer sur l'ensemble des OGV. Enfin, cette source additionnelle de bruit est difficile à synchroniser finement avec le bruit généré par les corps de soufflante pour créer des interférences acoustiques destructives.

L'état de la technique (voir par exemple le document GB2544625A) ne fournit donc pas de solution satisfaisante pour réduire le bruit généré par les flux d'air au sein d'un moteur présentant une architecture Multifan, réunissant efficacité de l'atténuation de bruit, adaptabilité au régime des corps de soufflante, et encombrement limité.

### PRESENTATION GENERALE DE L'INVENTION

Selon un premier aspect, l'invention concerne un ensemble propulsif d'aéronef comprenant un premier corps de soufflante, un deuxième corps de soufflante, une première conduite de passage d'air s'étendant en aval du premier corps de soufflante, et une deuxième conduite de passage d'air s'étendant en aval du deuxième corps de soufflante, comprenant :
une bague de contrôle disposée sur la première conduite en aval du premier corps de soufflante, une paroi interne annulaire de la bague de contrôle s'étendant dans un espace intérieur de ladite conduite, une commande de la bague de contrôle étant configurée pour modifier une forme de ladite paroi interne et pour faire varier une section de passage d'air dans ladite conduite au niveau de ladite bague,
un dispositif d'acquisition de signaux acoustiques générés par des ondes acoustiques se propageant en aval des corps de soufflante,
un dispositif de traitement desdits signaux acoustiques, configuré pour mesurer un déphasage entre lesdites ondes acoustiques et commander la bague de contrôle en fonction de ce déphasage

Dans la présente invention, un ensemble propulsif d'aéronef présentant une architecture à plusieurs corps de soufflante est équipé d'un système de contrôle actif du bruit moteur généré par les flux d'air, comprenant une bague de contrôle dont une paroi interne est de section variable. Ce système de contrôle génère très peu d'encombrement supplémentaire. Il exploite le fonctionnement simultané de plusieurs corps de soufflante, pour réaliser des interférences acoustiques destructives entre les ondes acoustiques en aval de ces soufflantes. Par exemple, pour un moteur comprenant deux corps de soufflante, l'un des rotors de soufflante est utilisé comme contre-bruit pour atténuer les ondes acoustiques produites par le flux d'air de l'autre rotor de soufflante.

Une conduite s'étend en aval de chaque corps de soufflante, dans laquelle peut se propager une onde acoustique produite par les flux d'air lorsque ledit corps de soufflante est en fonctionnement. La propagation de l'onde acoustique dans une telle conduite peut s'interpréter par des lobes acoustiques tournant sur la circonférence de la conduite. Le bruit moteur ainsi généré peut se décomposer en bruit large bande et bruit de raie, et peut se propager vers l'amont ou vers l'aval. L'invention peut agir sur le bruit de raie rayonné vers l'aval des corps de soufflante, en agissant sur le déphasage des modes acoustiques correspondants.

Une variation locale de la section de passage de l'air dans la conduite, au niveau de la bague de contrôle, permet de faire varier localement la vitesse d'écoulement de l'air. En créant un différentiel de vitesse entre l'écoulement dans la première conduite et l'écoulement dans la deuxième conduite, il est possible de contrôler le déphasage entre les ondes acoustiques circulant dans les deux dites conduites, et de générer des interférences acoustiques destructives.

De manière avantageuse, mais non limitative, l'ensemble propulsif exposé ci-avant peut présenter les caractéristiques additionnelles suivantes :
- la commande de la bague de contrôle est adaptée pour que la modification de la section de de passage d'air au niveau de la bague réalise des interférences destructives entre les ondes acoustiques en aval des corps de soufflante ;
- le dispositif d'acquisition d'ondes acoustiques est formé par une pluralité de microphones, dont au moins deux microphones disposés en aval des corps de soufflante à au moins deux positions axiales différentes sur une direction longitudinale d'extension des conduites ;
- la pluralité de microphones comprend des microphones disposés sur la paroi interne de chaque conduite en aval d'un corps de soufflante et/ou des microphones disposés le long de la paroi interne d'une tuyère confluente en aval d'une jonction entre les conduites ;
- la première conduite et la deuxième conduite débouchent, en aval des premier et deuxième corps de soufflante, sur une tuyère confluente au niveau d'une jonction, la pluralité de microphones étant disposée le long d'une paroi interne de la tuyère, après la jonction des conduites ;
- toutes les conduites en aval des corps de soufflante sont équipés de bagues de contrôle pour ajuster le déphasage ;
- le dispositif de traitement des signaux acoustiques est configuré pour calculer un spectre pour chaque signal acoustique en fonction d'une fréquence de rotation des corps de soufflante, et pour comparer les spectres obtenus pour mesurer le déphasage entre les signaux acoustiques ;
- une bague de contrôle est formée par un carter à paroi souple de rayon variable, une cavité interne du carter étant reliée à une source de pression de débit variable, la section de passage d'air correspondante étant contrôlée par ledit débit ;
- une bague de contrôle est formée par un carter à paroi souple de rayon variable, une source de température pouvant faire varier la température au sein d'une cavité interne de la bague, pour faire ainsi varier la section de passage d'air correspondante par dilatation thermique ;
- une bague de contrôle comprend une pièce mécanique en périphérie de la conduite correspondante, dont le rayon est variable et peut être réglé par un moteur pas à pas, pour faire varier la section de passage d'air correspondante ;
- les conduites de passage d'air en aval des corps de soufflante débouchent au niveau d'une jonction sur une tuyère confluente, ladite tuyère pouvant présenter une section de sortie circulaire ou ovale, et présenter un axe de symétrie de révolution.

Enfin, de manière très avantageuse et non limitative, chaque corps de soufflante comprend un jeu d'aubes de rotor de soufflante dont chaque aube est distante d'un angle d'aubes prédéterminé avec son aube consécutive, l'angle d'aubes prédéterminé étant le même pour tous les corps de soufflante,
et au moins deux jeux d'aubes de rotor de soufflante de deux corps de soufflante sont réglés pour être déphasés entre eux d'un angle de déphasage optimal d'aubes tout le long du régime moteur,
la mesure dudit angle de déphasage optimal d'aubes étant déterminée de sorte à réaliser des interférences destructives entre les ondes acoustiques en aval des corps de soufflante.

Un ensemble propulsif d'aéronef selon cette variante est configuré pour mettre en œuvre un contrôle passif du bruit.

La commande, par l'intermédiaire de la ou des bague(s) de contrôle, de la variation de section de passage d'air au sein d'une ou plusieurs conduites en aval des soufflantes, est configurée pour corriger les variations du déphasage entre les ondes acoustiques, par rapport au déphasage optimal qui correspond au décalage initial configuré entre les jeux d'aubes des soufflantes.

Un ensemble propulsif selon cette dernière variante présente, optionnellement, un dispositif de traitement des signaux acoustiques qui est configuré pour commander la variation du volume de la cavité de la bague de contrôle ou des bagues de contrôle, de sorte à corriger les variations du déphasage entre les ondes acoustiques, par rapport à l'angle de déphasage optimal d'aubes.

### PRESENTATION GENERALE DES FIGURES

D'autres caractéristiques, buts et avantages de l'invention ressortiront de la description qui suit, qui est purement illustrative et non limitative, et qui doit être lue en regard des **figures 1** **et** **2** annexées déjà introduites ci-avant, ainsi que des autres dessins annexés suivants :
La **figure 3** représente schématiquement les conduites en aval des corps de soufflante d'un moteur Multifan selon un premier mode de réalisation, comprenant un système de contrôle actif du déphasage entre les ondes acoustiques en aval des corps de soufflante.
La **figure 4** est une vue de face de deux corps de soufflante d'un turboréacteur d'architecture Multifan, tel que celui de la figure 3, dont les aubes de soufflante réalisent un contrôle passif du déphasage entre les ondes acoustiques.
La **figure 5** est une vue schématique d'une bague de contrôle utilisable au sein d'un système de contrôle actif anti-bruit, par exemple dans l'un quelconque des modes de réalisation illustrés par les figures 3 et 6.
La **figure 6** représente schématiquement les conduites en aval des corps de soufflante d'un moteur Multifan selon un deuxième mode de réalisation, comprenant un système de contrôle actif du déphasage entre les ondes acoustiques en aval des corps de soufflante.

### DESCRIPTION DE MODES DE REALISATION PARTICULIERS

Dans toute la suite, on considère un moteur d'aéronef à double corps, présentant une architecture de type Multifan, équipé d'un dispositif de contrôle actif du bruit avion généré par les corps de soufflante qui sera décrit ci-après. Ce moteur est du type à double flux, comportant un flux froid secondaire mis en vitesse par les corps de soufflante et un flux chaud primaire brûlé dans une chambre de combustion.

Ce moteur 1 présente deux rotors de soufflante 2a et 2b articulés au corps basse pression de l'arbre par le même système de transmission. Cependant, le dispositif de contrôle de bruit qui sera décrit dans la suite pourrait également être utilisé avec un moteur comportant plus de deux corps de soufflante, à condition que les flux d'air en aval desdits corps puissent se combiner et que des interférences destructives puissent être réalisées pour atténuer le bruit.

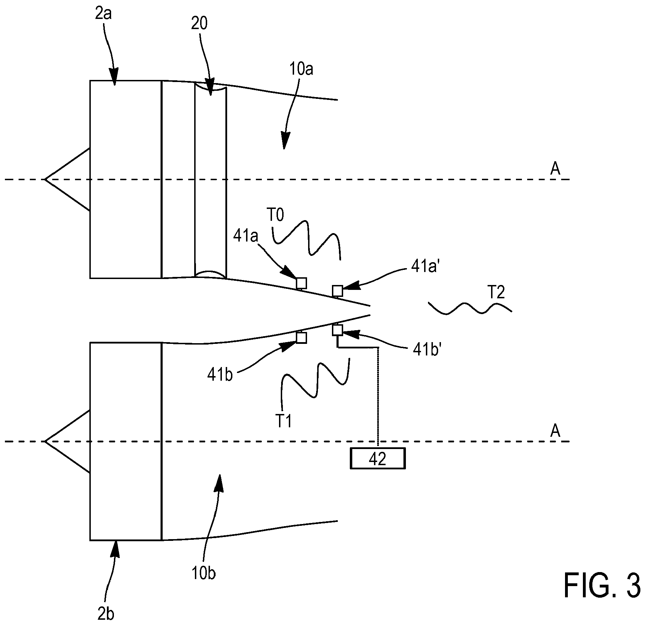

La **figure 3** représente de manière schématique un moteur à deux corps de soufflante équipé d'un dispositif de contrôle actif de bruit moteur selon un premier mode de réalisation.

Dans ce premier système, les deux corps de soufflante 2a et 2b sont distincts mais de conception sensiblement identique, et chaque corps de soufflante 2a et 2b débouche respectivement sur une conduite (ou veine aval) 10a et 10b. Les deux conduites 10a et 10b ne débouchent pas elles-mêmes dans une tuyère commune, mais débouchent directement à l'air libre ou à l'extérieur. Elles peuvent être de section constante sur leur longueur avant installation du dispositif de contrôle de bruit, ou bien de section variable, convergente ou divergente.

De manière préférentielle, mais non nécessaire à l'implémentation du dispositif de contrôle de bruit qui sera décrit ci-après, on cherche à réaliser un déphasage optimal Dₐ prédéterminé entre les jeux d'aubes respectifs des deux corps de soufflante 2a et 2b, de manière à obtenir deux signaux acoustiques en opposition de phase en sortie des deux soufflantes.

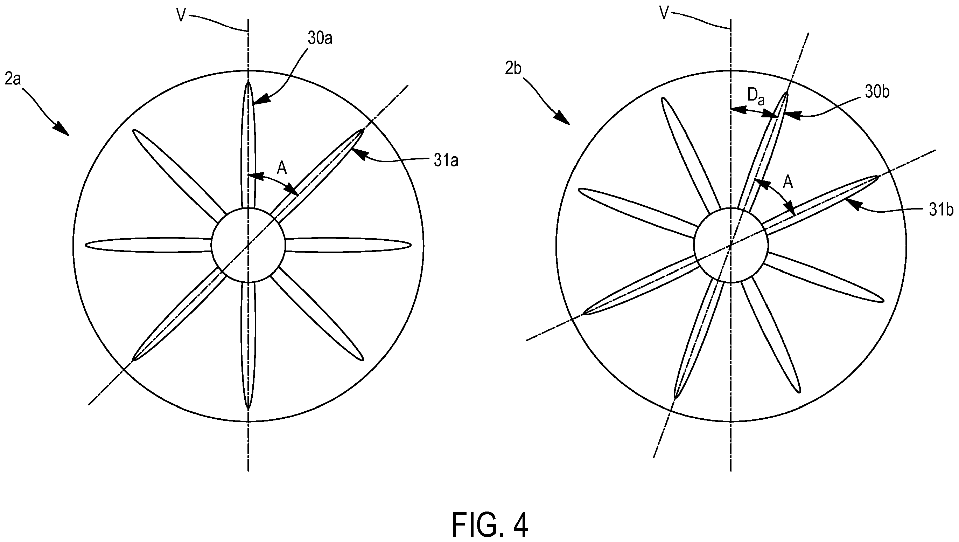

La **figure 4** représente schématiquement la configuration recherchée pour les aubes de soufflante du moteur représenté en figure 3. Les deux rotors de soufflante 2a et 2b y sont représentés en vue de face, selon le plan P de la figure 1. La conception des soufflantes 2a et 2b permet ainsi de mettre un œuvre un système de contrôle passif du bruit, qui vient complémenter le système de contrôle actif qui sera décrit ci-après, ce dernier système de contrôle actif reposant sur l'utilisation d'une bague de contrôle de section variable.

Toutefois, le système de contrôle actif et le système de contrôle passif peuvent être déployés indépendamment l'un de l'autre dans un moteur d'architecture Multifan. Une configuration optimale en termes d'atténuation de bruit avion est réalisée lorsque les deux modes de contrôle sont utilisés en association.

Revenant à la figure 4, le premier rotor de soufflante 2a est doté d'un jeu d'aubes dont deux aubes successives sont notées 30a et 31a dans la figure. De même, le deuxième rotor de soufflante 2b, de conception identique au rotor de soufflante 2a, présente le même jeu d'aubes comprenant deux aubes successives 30b et 31b.

L'angle A qui existe entre les aubes 30a et 31a est de même mesure que l'angle A' qui existe entre les aubes 30b et 31b, les soufflantes 2a et 2b étant de conception identique. Sur les deux soufflantes 2a et 2b est repérée une verticale V. Le deuxième jeu d'aubes est déphasé d'un angle de déphasage optimal Dₐ par rapport au premier jeu d'aubes.

La mesure d'angle de déphasage optimal Dₐ entre les deux jeux d'aubes ici représentés dépend notamment du régime moteur attendu, et peut être connue à partir d'essais moteurs à différents régimes. Une relation entre le régime moteur attendu et la mesure d'angle de déphasage optimal peut être obtenue avec des abaques. Le déphasage voulu peut être réalisé en indexant les aubes de soufflante de façon judicieuse au moment du montage du turboréacteur.

En relation à la figure 3, le dispositif de contrôle actif de bruit comprend une bague de contrôle 20, disposée sur une paroi intérieure de la conduite 10a en aval du corps de soufflante 2a, et un ensemble de microphones 41a, 41a', 41b, 41b' captant les ondes acoustiques passant dans les conduites 10a et 10b. Il est à noter que le système de contrôle actif pourrait comprendre plus de microphones, ou éventuellement un seul microphone par conduite. Lesdits microphones forment un dispositif d'acquisition de signaux acoustiques.

On a représenté en outre sur la figure 3 un dispositif 42 de traitement des signaux acoustiques acquis par les microphones 41a, 41a', 41b, 41b', configuré pour mesurer un déphasage D et commander la bague de contrôle 20 en fonction du déphasage D. Seule la liaison du dispositif 42 avec le microphone 41b' est représentée sur la Figure 3 ; toutefois, le dispositif 42 comprend une liaison avec chacun des microphones.
Des interactions entre la bague de contrôle 20, les microphones 41a à 41b', et le dispositif de traitement 42 (par exemple un processeur) pouvant communiquer selon tout protocole adapté avec des éléments de la bague 20 et avec les microphones 41a à 41b', assurent la commande de la bague de contrôle 20 selon des modalités décrites ci-après, pour faire varier le périmètre de la bague de contrôle, et donc faire varier la surface libre pour le passage de flux d'air, ou section de passage d'air.

Dans toute la suite, lorsqu'il est question de la section de passage d'air (ou d'onde acoustique) dans une conduite ou dans une tuyère, au niveau de la bague de contrôle, il s'agit de la surface minimale de l'espace intérieur de la conduite ou de la tuyère sur une coupe de la conduite ou de la tuyère, obtenue avec un plan de coupe localement perpendiculaire à l'axe de la conduite ou de la tuyère.

Par ailleurs, les corps de soufflante 2a et 2b étant identiques tout comme les conduites 10a et 10b, et les corps de soufflante 2a et 2b étant ici commandés pour conserver des régimes identiques durant tout le fonctionnement du moteur 1, les flux d'air générés par les soufflantes, et notamment par le mouvement des aubes de rotors de soufflante, laissent se propager des ondes acoustiques T0 et T1 respectivement au sein des conduites 10a et 10b qui sont théoriquement d'amplitude et de fréquence identiques. Les ondes T0 et T1 sont ici schématisées en sinusoïdes.

L'action de la bague de contrôle permet, par la réduction locale de section de passage des ondes en aval de la soufflante 2a, une modification locale de la propagation de l'onde T0, tandis que la propagation de l'onde T1 en aval de la soufflante 2b est non altérée. Cela provoque un déphasage de l'onde T0 relativement à l'onde T1. Dans la mesure où ces deux ondes acoustiques sont par ailleurs théoriquement de même amplitude et de même fréquence, le déphasage peut être bien choisi pour réaliser des interférences acoustiques destructives entre les deux ondes, en conformité avec le principe illustré par la figure 2.

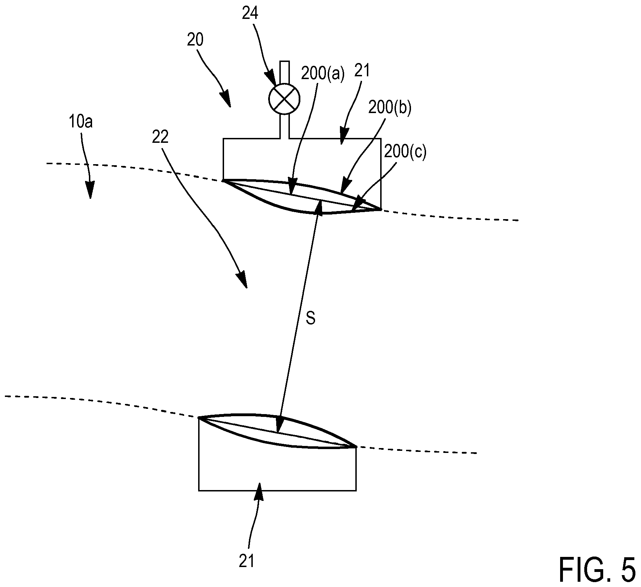

La **figure 5** illustre le détail d'une bague de contrôle 20 selon un mode de réalisation reposant sur des variations de pression au sein d'un volume interne de la bague. La bague 20 est formée dans ce mode de réalisation par un carter à parois souples de rayon variable, présentant une cavité interne 21 de forme sensiblement toroïde. Cette cavité 21 située entre les parois du carter, qui sont mobiles, ménage un passage central 22 de forme par exemple circulaire, la surface dudit passage central 22 correspondant à une section S de passage d'air. La section S constitue donc un espace de passage des flux d'air en aval du corps de soufflante 2a.

La section S de passage d'air est variable, en fonction de la position de la paroi interne 200 du carter. Cette paroi annulaire s'étend dans l'espace intérieur de la conduite 10a, et est donc exposée au passage de l'air en aval de la soufflante 2a. Par exemple, la bague de contrôle 20 peut être montée à l'intérieur de la conduite 10a, de sorte que la paroi externe du carter soit en contact avec une paroi interne de la conduite 10a, et que la paroi interne 200 soit à l'air libre.

Par ailleurs la cavité 21 de la bague 20 est en communication fluidique avec une source de pression 24 à débit variable. Cette source de pression 24 est contrôlée électroniquement par un dispositif de traitement. En fonction de la pression ainsi commandée à l'intérieur du carter, la paroi interne peut voir sa forme modifiée. Sur la figure 5, la paroi 200 est dans une position 200(a) au repos si les pressions dans le carter et dans l'espace intérieur de la conduite 10a sont sensiblement égales, dans une position 200(b) si la pression imposée par la source 24 est diminuée par rapport à la pression au repos, et dans une position 200(c) si la pression imposée par la source 24 est augmentée par rapport à la pression au repos. Le dispositif de traitement qui contrôle la source de pression 24 communique également avec les microphones 41a, 41a', 41b, 41b'.

Ledit dispositif de traitement traite les signaux acoustiques acquis en temps réel par les microphones. Un spectre acoustique est calculé pour chaque signal acoustique, en fonction d'une fréquence de rotation des corps de soufflante. Les spectres obtenus font apparaître des modes acoustiques pour la propagation du flux d'air en aval des corps de soufflante 2a et 2b, avec un certain déphasage. En théorie, si les corps de soufflante 2a et 2b étaient parfaitement synchrones et déphasés exactement du déphasage optimal Dₐ tout le long du régime moteur, et si toute la géométrie des éléments du moteur était identique entre les deux conduites, il ne devrait pas exister de déphasage lors de la recombinaison des ondes T0 et T1. Mais la comparaison des spectres acoustiques peut en pratique mettre en exergue un écart par rapport au déphasage optimal Dₐ, qu'il s'agit de réajuster.

En fonction du déphasage mesuré, le dispositif de traitement calcule la variation de la section S nécessaire pour générer un déphasage de l'onde acoustique en aval du corps de soufflante 2a (ou communique avec une unité séparée effectuant ce calcul), de sorte à ce que la recombinaison des ondes acoustiques T0 et T1 en aval des soufflantes 2a et 2b donne la meilleure interférence destructive possible pour réduire le bruit avion. On se rapproche ainsi de l'état du système qui serait obtenu si les géométries des conduites 10a et 10b étaient parfaitement identiques entre elles, et si les corps de soufflante 2a et 2b restaient en permanence au même régime et déphasés exactement du déphasage optimal Dₐ. En se rapprochant d'une opposition de phase exacte entre les signaux acoustiques T0 et T1, on peut réaliser un système de réduction de bruit particulièrement efficace, le signal acoustique s'annulant localement.

Pour relier le déphasage mesuré (différence par rapport au déphasage optimal Dₐ) qu'il s'agit de compenser, avec une variation nécessaire pour la section S, il est intéressant de disposer d'un modèle de la propagation de l'onde T0. Des abaques, obtenus par des essais moteurs à différents régimes, peuvent relier le déphasage désiré et la variation de section de passage d'air dans la conduite, en fonction de paramètres thermodynamiques, paramètres de régime moteur, ou autres paramètres pouvant impacter la propagation des ondes acoustiques en aval des corps de soufflante. En alternative, il est possible de réaliser un asservissement actif de la section de passage d'air dans la conduite. Connaissant la variation de section nécessaire pour réajuster le déphasage des ondes T0 et T1 entre elles, il est aisé de déterminer la variation de pression nécessaire pour le volume contenu dans le carter de la bague de contrôle 20, de sorte à ce que la paroi 200 soit déformée pour obtenir la section S désirée.

Ici, l'entrée et la sortie de l'air contenu dans l'espace interne 21 sont équipées de clapets, non représentés en figure 4, qui permettent de contrôler la pression à l'intérieur de la bague 20. Par ailleurs, la source de pression peut provenir soit directement des sorties d'air déjà prévues dans l'architecture moteur, soit d'une source de pression externe au fonctionnement moteur. Cette source de pression peut être réalisée selon toutes modalités connues de l'homme du métier qui soient compatibles avec un moteur d'architecture Multifan et qui puissent correspondre aux contraintes d'encombrement.

De préférence, pour une bague de contrôle fonctionnant avec des variations de pression d'un volume interne, il convient d'être attentif à ne pas provoquer un décrochement des aubes de rotor de soufflante, par une pression excessive imposée au sein du volume interne. Une trappe de surpression peut être prévue au niveau de la circulation d'air de la bague de contrôle pour éviter ce phénomène.

Alternativement, plutôt que de faire reposer la variation de la section de passage d'air ménagée par la bague de contrôle sur des variations de pression, on peut faire varier la température au sein de l'espace interne de la bague pour faire varier ladite section par dilatation thermique.

On peut également envisager d'enchâsser, dans l'espace interne de la bague 20, par exemple autour de la paroi interne 200 de la bague, une pièce mécanique de forme circulaire de rayon variable, contrôlé mécaniquement par l'action d'un moteur pas à pas. Dans ce cas, le contrôle de la section de passage d'air est mécanique et direct.

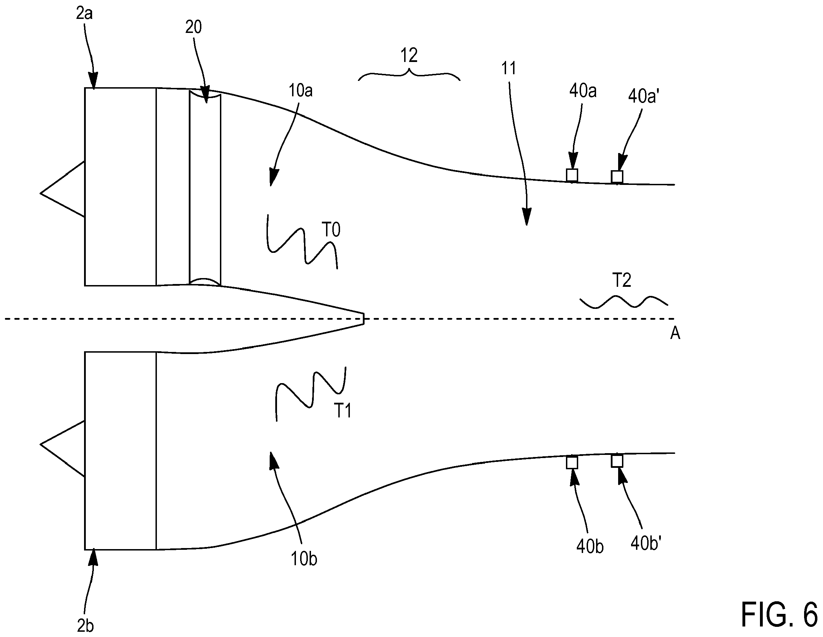

La **figure 6** représente de manière schématique un moteur d'architecture Multifan à deux corps de soufflante équipé d'un dispositif de contrôle actif de bruit avion selon un deuxième mode de réalisation.

Ici, les corps de soufflante 2a et 2b sont de conception sensiblement identique, et chaque corps de soufflante 2a et 2b débouche respectivement sur une conduite (ou veine aval) 10a et 10b comme dans le premier mode de réalisation. Les deux conduites 10a et 10b débouchent dans une tuyère commune 11, au niveau d'une jonction 12 entre les conduites 10a et 10b. De même que pour le premier mode de réalisation, on positionne ici une bague de contrôle 20 sur l'une des deux conduites en aval de l'une des deux soufflantes. Sur la figure 6, c'est la conduite 10a, en aval de la soufflante 2a, qui est équipée d'une bague de contrôle 20.

Le dispositif de contrôle actif de bruit de ce deuxième mode de réalisation comprend un jeu de microphones 40a, 40a', 40b, 40b' disposés sur une paroi intérieure de la tuyère 11, donc après recombinaison des conduites 10a et 10b. Les microphones sont disposés en aval de la jonction 12. On mesure donc ici directement le spectre acoustique d'un signal acoustique T2 recombiné à partir des signaux T0 et T1 se propageant en aval des deux corps de soufflante. Le fonctionnement de la bague de contrôle 20, et du contrôle de la section de passage d'air en fonction des signaux acoustiques acquis, sont identiques dans ce deuxième mode de réalisation et dans le premier mode de la figure 3.

Bien que dans les deux modes de réalisation décrits ci-avant, une seule bague de contrôle 20 soit mise en œuvre, le différentiel de propagation des ondes acoustiques à l'origine du déphasage peut être réparti entre les conduites aval, avec plusieurs conduites aval équipées de bagues de contrôle, jusqu'à une bague par conduite. On peut également envisager d'installer plusieurs bagues de contrôle en série sur une seule conduite si nécessaire. Pour un moteur d'architecture Multifan présentant un nombre de corps de soufflante strictement supérieur à 2, la mise en œuvre d'un contrôle actif du bruit est possible avec une seule bague de contrôle disposée sur la conduite aval d'un seul corps de soufflante, ou alternativement, avec plusieurs bagues de contrôle, jusqu'à une bague par conduite.

## Revendications

1. Ensemble propulsif d'aéronef comprenant un premier corps de soufflante (2a), un deuxième corps de soufflante (2b), une première conduite (10a) de passage d'air s'étendant en aval du premier corps de soufflante (2a), et une deuxième conduite (10b) de passage d'air s'étendant en aval du deuxième corps de soufflante (2b), **caractérisé en ce qu'**il comprend :
- une bague de contrôle (20) disposée sur la première conduite (10a) en aval du premier corps de soufflante (2a), une paroi interne (200) annulaire de la bague de contrôle s'étendant dans un espace intérieur de la première conduite (10a), une commande de la bague de contrôle (20) étant configurée pour modifier une forme de ladite paroi interne (200) et pour faire varier une section (S) de passage d'air au niveau de la bague (20),
- un dispositif d'acquisition de signaux acoustiques générés par des ondes acoustiques se propageant en aval des corps de soufflante,
- un dispositif de traitement (42) desdits signaux acoustiques, ledit dispositif étant configuré pour mesurer un déphasage (D) entre lesdites ondes acoustiques et commander la bague de contrôle (20) en fonction dudit déphasage.

2. Ensemble propulsif selon la revendication 1, dans lequel la commande de la bague de contrôle est configurée pour que la modification de la section (S) de de passage d'air au niveau de la bague réalise des interférences destructives entre les ondes acoustiques (T0, T1) en aval des corps de soufflante.

3. Ensemble propulsif selon l'une des revendications 1 ou 2, dans lequel le dispositif d'acquisition d'ondes acoustiques est formé par une pluralité de microphones, comprenant au moins deux microphones disposés en aval des corps de soufflante (2a, 2b) des positions axiales différentes sur une direction longitudinale (A) d'extension des conduites.

4. Ensemble propulsif selon la revendication 3, dans lequel la pluralité de microphones (41a, 41a', 41b, 41b') comprend, pour chaque conduite, des microphones disposés sur une paroi interne de ladite conduite.

5. Ensemble propulsif selon la revendication 3, la première conduite (10a) et la deuxième conduite (10b) débouchant, en aval des premier et deuxième corps de soufflante (2a, 2b), sur une tuyère confluente (11) au niveau d'une jonction (12), la pluralité de microphones (40a, 40a', 40b, 40b') étant disposée le long d'une paroi interne de la tuyère (11), en aval de la jonction (12) des conduites.

6. Ensemble propulsif selon l'une des revendications 1 à 5, dans lequel toutes les conduites (10a, 10b) en aval des corps de soufflante (2a, 2b) sont équipées de bagues de contrôle pour ajuster le déphasage (D).

7. Ensemble propulsif selon l'une des revendications 1 à 6, dans lequel une bague de contrôle comprend un carter à paroi souple de rayon variable, une cavité (21) à l'intérieur du carter étant reliée à une source de pression (24) de débit variable, la section (S) de passage d'air (22) correspondante étant contrôlée par ledit débit.

8. Ensemble propulsif selon l'une des revendications 1 à 7, dans lequel une bague de contrôle comprend un carter à paroi souple de rayon variable, une source de température pouvant faire varier la température au sein d'une cavité interne du carter, et faire ainsi varier la section de passage d'air correspondante par dilatation thermique.

9. Ensemble propulsif selon l'une des revendications 1 à 8, dans lequel une bague de contrôle comprend une pièce mécanique en périphérie de la conduite correspondante, la bague étant configurée pour permettre le réglage d'un rayon de la bague par un moteur pas à pas, pour faire varier la section de passage d'air correspondante.

10. Ensemble propulsif selon l'une des revendications 1 à 9, dans lequel le dispositif de traitement des signaux acoustiques est configuré pour calculer un spectre pour chaque signal acoustique en fonction d'une fréquence de rotation des corps de soufflante, et comparer les spectres obtenus, pour mesurer le déphasage entre les signaux acoustiques.

11. Ensemble propulsif selon l'une des revendications 1 à 10, dans lequel les conduites de passage d'air (10a, 10b) en aval des corps de soufflante débouchent au niveau d'une jonction (12) sur une tuyère confluente (11).

12. Ensemble propulsif selon l'une des revendications 1 à 11, dans lequel chaque corps de soufflante comprend un jeu d'aubes de rotor de soufflante dont chaque aube (30a) est distante d'un angle d'aubes prédéterminé (A) avec son aube consécutive (31a), l'angle d'aubes prédéterminé étant le même pour tous les corps de soufflante,
dans lequel au moins deux jeux d'aubes de rotor de soufflante de deux corps de soufflante (2a,2b) sont réglés pour être déphasés entre eux d'un angle de déphasage optimal d'aubes (Dₐ) tout le long du régime moteur,
la mesure dudit angle de déphasage optimal d'aubes (Dₐ) étant déterminée de sorte à réaliser des interférences destructives entre les ondes acoustiques en aval des corps de soufflante (2a, 2b).

13. Ensemble propulsif selon l'une des revendications 1 à 12, dans lequel le dispositif de traitement des signaux acoustiques est configuré pour commander la variation du volume de la cavité (21) de la bague de contrôle (20) ou des bagues de contrôle de sorte à corriger les variations du déphasage (D) entre les ondes acoustiques, par rapport à l'angle de déphasage optimal d'aubes (Dₐ).

## Patentansprüche

1. Antriebseinheit eines Luftfahrzeugs, umfassend einen ersten Gebläsekörper (2a), einen zweiten Gebläsekörper (2b), eine erste Luftdurchgangsleitung (10a), die sich nach dem ersten Gebläsekörper (2a) erstreckt, und eine zweite Luftdurchgangsleitung (10b), die sich nach dem zweiten Gebläsekörper (2b) erstreckt,
**dadurch gekennzeichnet, dass** sie umfasst:
- einen Kontrollring (20), der auf der ersten Leitung (10a) nach dem ersten Gebläsekörper (2a) angeordnet ist, eine ringförmige Innenwand (200) des Kontrollrings, die sich in einen Innenraum der ersten Leitung (10a) erstreckt, eine Steuerung des Kontrollrings (20), die konfiguriert ist, um eine Form der Innenwand (200) zu verändern und um einen Luftdurchgangsquerschnitt (S) im Bereich des Rings (20) zu variieren,
- eine Erfassungsvorrichtung akustischer Signale, die von Schallwellen erzeugt werden, die sich nach den Gebläsekörpern verbreiten,
- eine Verarbeitungsvorrichtung (42) der akustischen Signale, wobei die Vorrichtung konfiguriert ist, um eine Phasenverschiebung (D) zwischen den Schallwellen zu messen und den Kontrollring (20) in Abhängigkeit von der Phasenverschiebung zu steuern.

2. Antriebseinheit nach Anspruch 1, wobei die Steuerung des Kontrollrings konfiguriert ist, damit die Veränderung des Luftdurchgangsquerschnitts (S) im Bereich des Rings zerstörerische Interferenzen zwischen den Schallwellen (T0, T1) nach den Gebläsekörpern durchführt.

3. Antriebseinheit nach einem der Ansprüche 1 oder 2, wobei die Schallwellen-Erfassungsvorrichtung von einer Vielzahl von Mikrofonen gebildet ist, umfassend mindestens zwei Mikrofone, die nach den Gebläsekörpern (2a, 2b) an unterschiedlichen axialen Positionen über eine Längsausdehnungsrichtung (A) der Leitungen angeordnet sind.

4. Antriebseinheit nach Anspruch 3, wobei die Vielzahl von Mikrofonen (41a, 41a', 41b, 41b') für jede Leitung Mikrofone umfasst, die auf einer Innenwand der Leitung angeordnet sind.

5. Antriebseinheit nach Anspruch 3, wobei die erste Leitung (10a) und die zweite Leitung (10b) nach dem ersten und zweiten Gebläsekörper (2a, 2b) auf einer Zusammenflussdüse (11) im Bereich einer Verbindung (12) ausmünden, wobei die Vielzahl von Mikrofonen (40a, 40a', 40b, 40b') entlang einer Innenwand der Düse (11) nach der Verbindung (12) der Leitungen angeordnet ist.

6. Antriebseinheit nach einem der Ansprüche 1 bis 5, wobei alle Leitungen (10a, 10b) nach den Gebläsekörpern (2a, 2b) mit Kontrollringen ausgestattet sind, um die Phasenverschiebung (D) einzustellen.

7. Antriebseinheit nach einem der Ansprüche 1 bis 6, wobei ein Kontrollring ein Gehäuse mit flexibler Wand mit variablem Radius umfasst, wobei ein Hohlraum (21) im Inneren des Gehäuses mit einer Druckquelle (24) mit variablem Durchsatz verbunden ist, wobei der entsprechende Querschnitt (S) des Luftdurchgangs (22) von dem Durchsatz kontrolliert wird.

8. Antriebseinheit nach einem der Ansprüche 1 bis 7, wobei ein Kontrollring ein Gehäuse mit flexibler Wand mit variablem Radius umfasst, wobei eine Temperaturquelle die Temperatur im Inneren eines inneren Hohlraums des Gehäuses variieren kann und somit den entsprechenden Luftdurchgangsquerschnitt durch thermische Ausdehnung variieren kann.

9. Antriebseinheit nach einem der Ansprüche 1 bis 8, wobei ein Kontrollring ein mechanisches Teil am Umfang der entsprechenden Leitung umfasst, wobei der Ring konfiguriert ist, um die Einstellung eines Radius des Rings durch einen Schrittmotor zu erlauben, um den entsprechenden Luftdurchgangsquerschnitt zu variieren.

10. Antriebseinheit nach einem der Ansprüche 1 bis 9, wobei die Verarbeitungsvorrichtung der akustischen Signale konfiguriert ist, um ein Spektrum für jedes akustische Signal in Abhängigkeit von einer Rotationsfrequenz der Gebläsekörper zu berechnen und um die erhaltenen Spektren zu vergleichen, um die Phasenverschiebung zwischen den akustischen Signalen zu messen.

11. Antriebseinheit nach einem der Ansprüche 1 bis 10, wobei die Luftdurchgangsleitungen (10a, 10b) nach den Gebläsekörpern im Bereich einer Verbindung (12) auf einer Zusammenflussdüse (11) ausmünden.

12. Antriebseinheit nach einem der Ansprüche 1 bis 11, wobei jeder Gebläsekörper einen Gebläserotor-Schaufelsatz umfasst, wobei jede Schaufel (30a) in einem vorher festgelegten Schaufelwinkel (A) mit ihrer folgenden Schaufel (31a) beabstandet ist,
wobei der vorher festgelegte Schaufelwinkel derselbe für alle Gebläsekörper ist,
wobei mindestens zwei Gebläserotor-Schaufelsätze von zwei Gebläsekörpern (2a, 2b) eingestellt sind, um untereinander in einem optimalen Schaufel-Phasenverschiebungswinkel (Dₐ) über den gesamten Motordrehzahlbereich phasenverschoben zu sein,
wobei die Messung des optimalen Schaufel-Phasenverschiebungswinkels (Dₐ) derart bestimmt ist, dass zerstörerische Interferenzen zwischen den Schallwellen nach den Gebläsekörpern (2a, 2b) durchgeführt werden.

13. Antriebseinheit nach einem der Ansprüche 1 bis 12, wobei die Verarbeitungsvorrichtung der akustischen Signale konfiguriert ist, um die Variation des Volumens des Hohlraums (21) des Kontrollrings (20) oder der Kontrollringe derart zu steuern, dass die Variationen der Phasenverschiebung (D) zwischen den Schallwellen in Bezug auf den optimalen Schaufel-Phasenverschiebungswinkel (Dₐ) korrigiert werden.

## Claims

1. An aircraft propulsion unit comprising a first fan spool (2a), a second fan spool (2b), a first air passage duct (10a) extending downstream of the first fan spool (2a) and a second air passage duct (10b) extending downstream of the second fan spool (2b), the propulsion unit comprising:
- a control ring (20) disposed on the first duct (10a) downstream of the first fan spool (2a), an internal annular wall (200) of the control ring extending into an interior space of the first duct (10a), a control unit of the control ring (20) being configured to modify a shape of said internal wall (200) and to vary an air passage cross section (S) at the ring (20),
- a device for acquiring acoustic signals generated by the acoustic waves propagating downstream of the fan spools,
- a device for processing (42) said acoustic signals, said device being configured to measure dephasing (D) between said acoustic waves and control the control ring (20) depending on said dephasing.

2. The propulsion unit according to claim 1, wherein the control unit of the control ring is configured so that the modification of the air passage cross section (S) at the ring creates destructive interference between the acoustic waves (T0, T1) downstream of the fan spools.

3. The propulsion unit according to one of claims 1 or 2, wherein the device for acquiring acoustic waves is formed by a plurality of microphones, comprising at least two microphones disposed downstream of the fan spools (2a, 2b) at different axial positions in a longitudinal extension direction (A) of the ducts.

4. The propulsion unit according to claim 3, wherein the plurality of microphones (41a, 41a', 41b, 41b') comprises, for each duct, microphones disposed on an internal wall of said duct.

5. The propulsion unit according to claim 3, the first duct (10a) and the second duct (10b) leading, downstream of the first and second fan spools (2a, 2b), to a confluent nozzle (11) at a junction (12), the plurality of microphones (40a, 40a', 40b, 40b') being disposed along an internal wall of the nozzle (11), downstream of the junction (12) of the ducts.

6. The propulsion unit according to one of claims 1 to 5, wherein all of the ducts (10a, 10b) downstream of the fan spools (2a, 2b) are equipped with control rings to adjust dephasing (D).

7. The propulsion unit according to one of claims 1 to 6, wherein a control ring comprises a casing with a flexible wall of variable-radius, a cavity (21) in the interior of the casing being connected to a pressure source (24) with a variable flow rate, the corresponding air passage (22) cross section (S) being controlled by said flow rate.

8. The propulsion unit according to one of claims 1 to 7, wherein a control ring comprises a casing with a flexible wall of variable radius, a temperature source which can cause the temperature within an internal cavity of the casing to vary, and thus cause the corresponding air passage cross section to vary by thermal dilation.

9. The propulsion unit according to one of claims 1 to 8, wherein a control ring comprises a mechanical part in the periphery of the corresponding duct, the ring being configured to allow the adjustment of a radius of the ring by a stepping motor, to cause the corresponding air passage cross section to vary.

10. The propulsion unit according to one of claims 1 to 9, wherein the device for processing acoustic signals is configured to calculate a spectrum for each acoustic signal depending on a frequency of rotation of the fan spools, and to compare the spectra obtained to measure the dephasing between the acoustic signals.

11. The propulsion unit according to one of claims 1 to 10, wherein the air passage ducts (10a, 10b) downstream of the fan spools lead at a junction (12) to a confluent nozzle (11).

12. The propulsion unit according to one of claims 1 to 11, wherein each fan spool comprises a set of fan rotor blades in which each blade (30a) is distant by a predetermined blade angle (A) from its consecutive blade (31a),
the predetermined blade angle being the same for all the fan spools,
wherein at least two sets of fan rotor blades of two fan spools (2a, 2b) are adjusted to be dephased from one another by an optimal blade dephasing angle (Dₐ) throughout the engine operating range,
the measurement of said optimal blade dephasing angle (Dₐ) being determined so as to create the destructive interference between the acoustic waves downstream of the fan spools (2a, 2b).

13. The propulsion unit according to one of claims 1 to 12, wherein the device for processing the acoustic signals is configured to control the variation of volume of the cavity (21) of the control ring or of the control rings (20) so as to correct the variations of dephasing (D) between the acoustic waves, with respect to the optimal blade dephasing angle (Dₐ).
